# EUROPÄISCHE PATENTSCHRIFT

(11) **EP 2 591 559 B1**
(45) Veröffentlichungstag und Bekanntmachung des Hinweises auf die Patenterteilung: **10.08.2016**
(21) Anmeldenummer: 11728627.8
(22) Anmeldetag: 28.06.2011
(51) Int. Cl.: H04B 3/54, B61L 3/20, B65G 1/04, B60M 3/00, B60L 5/38

(54) **TRANSPORTSYSTEM MIT FÜHRUNGEN FÜR GEFÜHRTE TRANSPORTFAHRZEUGE UND VERFAHREN ZU DESSEN BETRIEB**
TRANSPORTATION SYSTEM WITH GUIDES FOR GUIDED TRANSPORTATION VEHICLES AND METHOD FOR OPERATING SAID TRANSPORTATION SYSTEM
SYSTÈME DE TRANSPORT COMPRENANT DES DISPOSITIFS DE GUIDAGE POUR DES VÉHICULES DE TRANSPORT GUIDÉS ET SON PROCÉDÉ DE FONCTIONNEMENT

(30) Priorität: 06.07.2010 DE 102010030998
(43) Veröffentlichungstag der Anmeldung: 15.05.2013
(73) Patentinhaber: Dematic Systems GmbH, 63150 Heusenstamm (DE)
(72) Erfinder: CREMER, Holger, 40219 Düsseldorf (DE)
(74) Vertreter: Moser Götze & Partner Patentanwälte mbB
(86) Internationale Anmeldenummer: PCT/EP2011/060840
(87) Internationale Veröffentlichungsnummer: WO 2012/004163

(56) Entgegenhaltungen:
- DE-A1- 10 058 766
- DE-A1- 10 059 072
- DE-A1- 19 604 154
- GB-A- 2 178 627
- US-B1- 6 213 025

## Beschreibung

Die Erfindung betrifft ein Transportsystem mit Führungen für geführte Transportfahrzeuge, wobei die Transportfahrzeuge über eine Schleifleitung mit elektrischem Strom versorgt werden und ein entsprechendes Betriebsverfahren.

Aus der EP 1 254 852 B1 ist ein Lager- und Transportsystem mit auf Schienenwegen verfahrbaren Transportfahrzeugen, sogenannten Satellitenfahrzeuge oder Shuttles, bekannt, die von einem Steuerrechner über eine Funkverbindung (WLAN) gesteuert werden. Die Stromversorgung der Fahrzeuge erfolgt entweder über Schleifleitungen oder per Induktion.

Die Verwendung von WLAN Technik hat dabei den Vorteil, dass keinerlei Hardware an den Schienenwegen selbst installiert werden muss und die sich ständig bewegenden Satellitenfahrzeuge immer per Funk erreichbar sind bzw. kommunizieren können. Dafür muss jedoch jedes Fahrzeug einen WLan Adapter mit sich führen.

Die WLAN- Kommunikation weist jedoch den systembedingten Nachteil auf, dass sie von der Topologie der Anlage abhängig ist. Dies führt zu einer Verschlechterung der Anlagenverfügbarkeit und Verteuerung der Projekte. Weiterhin muss eine W-Lan-Ausrüstung von Anlage zu Anlage immer wieder neu geplant und in Betrieb gesetzt werden. Eine Plug&Play-Lösung ist mit der W-Lan-Technik ohne Weiteres nicht möglich.

Der Aufbau großer WLANs mit mehreren Basisstationen und unterbrechungsfreiem Wechsel der Clients zwischen den verschiedenen Basisstationen ist zwar im Standard vorgesehen. In der Praxis kommt es dabei allerdings zu Problemen. Die Frequenzbereiche der Basisstationen überlappen sich und führen zu Störungen. Da - anders als in Mobilfunknetzen - die "Intelligenz" komplett im Client steckt, gibt es kein echtes Handover zwischen verschiedenen Basisstationen. Ein Client wird im Normalfall erst nach einer neuen Basisstation suchen, wenn der Kontakt zur vorherigen bereits abgebrochen ist. Aufgrund der begrenzten Anzahl frei verfügbarer W-Lan-Kanäle ist die bisherige Anlagengröße beschränkt, da sich eine Wiederholung eines Kanals negativ auf die Anlagenverfügbarkeit auswirkt und Störungen verursacht. Zusätzlich gibt es je nach Land Einschränkungen der Anzahl freier W-Lan-Kanäle. Zudem benutzen Anlagenbetreiber selber sehr häufig W-Lan-Technik in ihren Lägern, die dann Einsatz erschweren oder unmöglich machen.

Zwar existieren stromschienengebundene Datenübertragungen, allerdings weist diese Technik immer wieder Störungen auf.

So ist aus der DE 100 59 072 A1 eine Einrichtung zur Übertragung von binären Daten zwischen zwei relativ zueinander verfahrbaren Teilnehmern über eine Schleifleitung bekannt, wobei Sendedaten eines sendenden Teilnehmers über einen energieverstärkenden Leitungskoppler auf die Schleifleitung gelangen und die Schleifleitung an ihren Enden offen ist, wobei der Frequenzgehalt der auf die Schleifleitung gelangenden Sendedaten auf ein in Abhängigkeit von einer vorgegebenen maximalen Datenübertragungsrate zulässiges Maß begrenzt ist und die Schleifleitung in Bezug auf den begrenzten Frequenzgehalt der Sendedaten als elektrisch kurze Leitung ausgebildet ist. Diese Schleifleitung wird allerdings nur für die Datenübertragung verwendet.

Es ist ebenfalls bekannt, Stromleitungen in Privathaushalten zur Datenübertragung für Computer zu nutzen. Diese Technik, auch PowerLAN oder Powerline Communication (PLC) genannt, bezeichnet ein Local Area Network, das Leitungen für die Versorgung mit der üblichen Netzspannung zur Datenübertragung mit nutzt. Es handelt sich um eine Trägerfrequenzanlage, die durch Adapter für Schuko-Steckdosen realisiert wird. Mittels einer Trägerfrequenzanlage (TFA) werden auf der Leitung zusätzlich mehrere Signale auf je eine Trägerfrequenz moduliert (Frequenzmultiplexverfahren) und über die Leitung verteilt. Über einen Bandpass werden die Frequenzen am Empfangsadapter wieder von den Trägerfrequenzen getrennt.

Desweiteren handelt es sich hierbei um eine Kommunikation, bei der das Netzwerk vor Beginn der Übertragung von Daten durch einen Modemabgleich vermessen wird. Nur so ist es möglich, das offene Hausnetz, an dem unterschiedlichste Verbraucher an unterschiedlichsten Stellen angeschlossen sind, überhaupt erfolgreich zu verwenden.

Stromdurchflossene Leiter wirken allerdings wie Antennen und strahlen die TFA-Signale in die Umgebung ab. Da eine Stromleitung ohne Abschirmung auch Signale aus der Umgebung und von angeschlossenen Geräten aufnimmt, besteht das Problem darin, dass zur Aufrechterhaltung einer guten Verbindung hohe Sendepegel der TFA-Modems notwendig sind. Hohe Sendepegel der Modems führen jedoch zu höheren abgestrahlten Signalen.

Demgegenüber besteht die Aufgabe der vorliegenden Erfindung darin, eine einfache Möglichkeit für eine Datenübertragung zwischen schienengebundenen Transportfahrzeugen und einem (zentralen) Steuerrechner bereitzustellen. Insbesondere soll gleichzeitig auf einfache Weise eine Stromversorgung und sichere Datenübertragung möglich sein.

Diese Aufgabe wird durch das in Anspruch 1 wiedergegebene Transportsystem und das im Anspruch 11 wiedergegebene Verfahren gelöst.

Dadurch, dass die Transportfahrzeuge über dieselbe Schleifleitung auch mit Daten von einer Steuereinheit versorgt werden, ist eine besonders einfache Datenübertragung bzw. Versorgung mit Daten ohne zusätzliche Installationen an den Schleifleitungen oder Führungen etc. möglich. Es muss lediglich jedes Fahrzeug und die zentrale Steuerung mit einem entsprechenden Schnittstellenadapter versehen werden.

Besonders bevorzugt ist es, wenn die Schleifleitung für die Datenversorgung in Abschnitte unterteilt ist, wobei im jedem Abschnitt gleichzeitig nur ein oder mehrere Transportfahrzeuge sich befinden und jeder Abschnitt nur mit den Daten für die jeweiligen Transportfahrzeuge versorgt wird, ist es trotz des Bürstenfeuers beim "Abnehmen" des Strom bzw. der Daten von der Schleifleitung möglich, eine erfolgreiche und sichere Datenübertragung zwischen mehreren schienengebundenen Transportfahrzeugen und einem zentralen Steuerrechner bereitzustellen.

Es ist also möglich, dass die Transportfahrzeuge sich Abschnitte teilen bzw. Abschnitte wechseln. So kann vorgesehen sein, dass die Transportfahrzeuge Lifte oder Weichen verwenden, um Abschnitte zu verlassen und in andere Abschnitte zu wechseln. Dann kann die Adressierung der Daten an die Schleifleitungen der entsprechenden Lifte, Weichen etc. für eine Gruppe von Transportfahrzeugen erfolgen, so dass diese Abschnitte mit den entsprechenden Daten aufwarten, sobald ein Transportfahrzeug diese verwendet.

Eine besonders einfache und zuverlässige Ausführungsform umfasst lediglich ein einzelnes Transportfahrzeug gleichzeitig pro Schleifleitungsabschnitt.

Durch die Aufteilung der Schleifleitung in Abschnitte wird, trotz der sich bewegenden Fahrzeuge und somit der sich ändernden Leitungslänge und damit ändernder Netztopologie, quasi eine Punkt-zu-Punkt Kommunikation ermöglicht.

Unter Schleifleitung wird vorliegend eine Stromschiene als Zuleitung für den elektrischen Strom für den elektrischen Antrieb der Transportfahrzeuge verstanden. Die Stromzuführung von der Stromschiene zum Transportfahrzeuge erfolgt über sogenannte Schleifschuhe oder Stromabnehmer.

Unter elektrischem Strom wird vorliegend der elektrische Strom zur Versorgung der elektrischen Fahrantriebe der Transportfahrzeuge, z.B. Elektromotoren, verstanden. Hierbei handelt es sich vorzugsweise um Wechselstrom und insbesondere im Bereich zwischen 40 V bis 220 V, ganz besonders bevorzugt im Bereich zwischen 40 V und 110 V. Ein Einsatz von Gleichstrom ist ebenfalls möglich.

Trotz der Aufteilung der Schleifleitung in mehrere Abschnitte, können mehrere Abschnitte eine parallele Einspeisung aus derselben Stromquelle aufweisen. Die Aufteilung in Abschnitte betrifft nur die Dateneinspeisung, die gezielt/adressiert in den jeweiligen Schleifleitungsabschnitt erfolgt. Die Stromversorgung kann also zentralisiert bzw. gruppiert erfolgen.

Um ein ungewolltes Übersprechen der gezielt adressierten Daten aus der Datenübertragung von einem Schleifleitungsabschnitt in andere nicht adressierte Schleifleitungsabschnitte zu verhindern, ist es sinnvoll, wenn eine Filtereinrichtung zwischen der Stromeinspeisung und der Dateneinspeisung jedes Schleifleitungsabschnitts zur Verhinderung des Übersprechen der Datensignale in das Stromnetz geschaltet ist. Bevorzugterweise umfasst der Filter dazu eine Induktivität und/oder einen Kondensator oder nur eine Induktivität. Die Filtereinrichtung filtert also die Datensignale aus der Stromversorgung heraus.

In einer bevorzugten Ausführungsform umfasst das Transportsystem eine Einrichtung zur gezielten Modulation der Daten auf die Stromversorgung für die Versorgung eines bestimmten Transportfahrzeugs in einem Schleifleitungsabschnitt und in jedem Fahrzeug eine Einrichtung zur Demodulation der Daten aus dem Versorgungs-Strom vorgesehen ist. Die Daten für das jeweilige Transportfahrzeug werden also adressiert bzw. gezielt über die Einrichtung an den jeweiligen Schleifleitungsabschnitt geschickt (aufmoduliert), an dem sich das entsprechende Transportfahrzeug befindet. Die Einrichtung zur gezielten Modulation funktioniert dabei ähnlich wie ein Switch aus der herkömmlichen Ethernet Technologie.

Die Einrichtung zur gezielten Modulation speichert also den jeweiligen Aufenthaltsort eines Transportfahrzeugs, also den Schleifleitungsabschnitt. Dies kann sich selbstlernend und automatisch vollziehen oder programmiert werden. Anschließend erfolgt die Kommunikation von der Einrichtung zur gezielten Modulation direkt über die jeweiligen Schleifleitungsabschnitte. Die Rück-Kommunikation von dem Transportfahrzeug ist entsprechend "einfacher", da nur ein Weg, nämlich der jeweilige Schleifleitungsabschnitt verfügbar ist.

Selbstverständlich ist es aber möglich, nach Art eines Broadcast Signals, gleichzeitig eine Datenübertragung in alle Abschnitte oder Abschnittsgruppen etc. vorzunehmen.

Vorzugsweise handelt es sich bei den Führungen um Schienenwege und bei den Transportfahrzeugen um schienengebundene Transportfahrzeuge. Es könne jedoch auch im Rahmen der Erfindung andere Führungen verwendet werden. So sind z.B. seitlich begrenzte Fahrbahnen für die Transportfahrzeuge ebenfalls als Führungen verwendbar. Es könnte sogar die Schleifleitung selber als Führung verwendet werden.

Zur Erhöhung der Sicherheit und der Redundanz der Datenübertragung, ist die übertragene Netto-Datenübertragungsrate der Schleifleitung so klein ist, dass die benötigte Brutto-Datenübertragungsrate groß genug ist, um die benötigte Datenmenge zu übertragen. Somit kann trotz der großen Störungen, z.B. durch das Bürstenfeuer, eine sichere Übertragung gewährleistet worden.

Vorzugsweise liegt die Netto-Datenübertragungsrate zwischen 20 und 50 kBaud.

Es ist also entgegen der herrschenden Vorgehensweise, zu immer leistungsfähigeren und höheren Übertragungsraten, bewusst der entgegengesetzte Weg zu niedrigeren Übertragungsraten gewählt worden.

Die für die sichere Datenübertragung während des Transportes gewählte Übertragungseigenschaften (Geschwindigkeit und Redundanz) können für den sogenannten Offline Betrieb (keine Kommunikation zum Steuerrechner), z.B. Programmdownload geändert werden. Geht man davon aus, dass beispielsweise der Programmdownload während des Stillstandes des Transportfahrzeugs durchgeführt wird, ist nicht damit zu rechnen, dass aufgrund eines Bürstenfeuers Störungen zu erwarten sind. Somit kann die Übertragungsredundanz des Protokolls reduziert werden, was eine Erhöhung der Netto Datenübertragungsgeschwindigkeit mit sich führen würde. Somit ist es im Stillstand der Transportfahrzeuge möglich, auch größere Datenmengen, z.B. bei einem Update der Firmware der Transportfahrzeuge, an die Transportfahrzeuge zu übermitteln.

Somit kann das erfindungsgemäße Verfahren auch im Offline Betrieb mit reduzierter Übertragungsredundanz und/oder erhöhter Datenübertragungsrate, um eine Erhöhung der Netto Datenübertragungsgeschwindigkeit zu den stillstehenden Transportfahrzeugen zu bewirken, verwendet werden.

Das Datenübertragungsverfahren kann neben der reinen Datenübertragung auch als Messverfahren für die Qualität der Stromabnehmer genutzt werden. Sollte sich die Übertragungsqualität aufgrund einer erhöhten Bürstenfeuerbildung verschlechtern, verringert sich auch die Datenübertragungsgeschwindigkeit, so dass viele Datenpakete wiederholt übertragen werden müssen. Damit sinkt die Datenrate was somit als Messgröße für die Qualität der Stromübertragung genutzt werden kann. Somit kann das erfindungsgemäße Verfahren auch als Messverfahren für die Qualität der Stromabnehmer der Transportfahrzeuge verwendet werden, wobei die Übertragungsqualität überwacht wird und deren Verschlechterung als Maß für die

Abnutzung der Stromabnehmer dient.

Besonders bevorzugt ist es, wenn das Transportsystem mit Schienenwegen versehen ist und es sich um schienengebundene Transportfahrzeuge handelt.

Das erfindungsgemäße System und Verfahren kann insbesondere Anwendung in innerbetrieblichen Logistikanwendungen finden. Besonders bevorzugt ist die Verwendung in Lager- und Transportsystemen mit ein oder mehreren Ebenen mit sich anschließender Fördertechnik, Regalen, Arbeitsplätzen usw.

In solchen Lager- und Transportsystemen bedient beispielsweise ein schienengebundenes Transportfahrzeug im Regal das gesamte Lagersystem. Das Systemkonzept basiert auf autonomen, schienengeführten Fahrzeugen zum Paletten-, Behälter-, Tablar-, Karton-, Gebinde- oder sonstigem Gütertransport einschließlich dem direkten Gütertransport ohne Ladehilfsmittel, die innerhalb und außerhalb des Lagersystems verkehren. Ein spezielles Lastaufnahmemittel ermöglicht kurze Lastwechselzeiten sowie simultane Be- und Entladungen. Das System verfügt über Fahrschienen, die in jeder Ebene des Lagers beziehungsweise aufgeständert oder abgehangen in der Vorzone installiert sein können. Über hochdynamische Lifte wechseln die Fahrzeuge ggf. die Ebenen. Sowohl die Energie als auch die "Aufträge" erhalten die Transportfahrzeuge über die schleifleitungsbezogene Strom- und Datenübertragung gemäß der Erfindung.

Als Transportfahrzeuge kommen jedoch auch Regalförderzeuge, Regalbediengeräte, Verteil- und Verfahrwagen sowie andere fördertechnische schienengebundene Systeme in Frage.

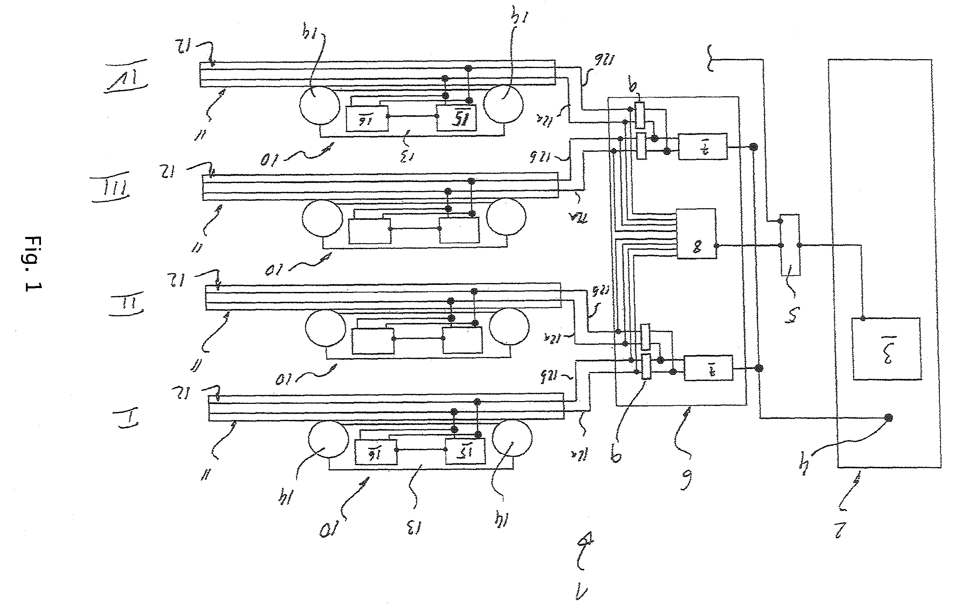

Weitere Einzelheiten, Merkmale und Vorteile der Erfindung ergeben sich aus der nachfolgenden Beschreibung eines Ausführungsbeispiels anhand der einzigen Zeichnung (Figur 1), in der schematisch ein Blockschaltbild eines Transportsystems mit geführten Transportfahrzeugen und deren Versorgung mit Strom und Daten über eine Schleifleitung gezeigt ist.

In der Figur 1 ist das Transportsystem als Ganzes mit 1 bezeichnet. Es umfasst eine zentrale Steuerungs- und Stromversorgungselektronik 2, die in einem Schaltschrank integriert ist. Diese weist eine zentrale Steuerung 3 für die Steuerung der Transportfahrzeuge und eine zentrale Stromeinspeisung 4 für die Versorgung des Systems mit elektrischer Energie auf.

Die Transportfahrzeuge 10 sind schienengebundene Satellitenfahrzeuge, die jeweils in einer Ebene I, II, III, IV einer Gasse eines Regals auf dort zwischen den Regalseiten angeordneten Fahrschienen 11 fahren und von diesen geführt werden.

Im Bereich der Fahrschienen 11 sind Schleifleitungen 12 angeordnet, die von den Transportfahrzeugen 10 mittels Abnehmern kontaktiert werden, um Strom und Daten aufzunehmen. Im vorliegenden Beispiel wird 24V Gleichstrom auf die Schleifleitungen 12 eingespeist, so dass diese zwei Adern 12a, b aufweist.

Die Transportfahrzeuge 10 weisen neben den Rädern 14 und dem zur besseren Übersicht nicht dargestellten Stromabnehmern eine Einheit 15 für die Datenextraktion aus dem abgegriffenen Strom sowie eine intelligente programmierbare Steuerung 16, die die aus den extrahierten Daten erhaltenen "Aufträge", Fahrbefehle etc. umsetzt. Es versteht sich, dass die Einheit 15 neben der Demodulation der Daten aus dem Strom ebenfalls Daten Modulieren kann, um Daten von dem Transportfahrzeug 10 zu der zentralen Steuerung 3 zu senden.

Die intelligente programmierbare Steuerung 16 wird parallel direkt mit dem abgegriffenen Strom versorgt, um beispielsweise Bordelektronik und die Fahrantriebe zu versorgen

Die Stromversorgung der einzelnen Abschnitte der Schleifleitungen der jeweiligen Ebene I, II, III, IV erfolgt paarweise über Netzteile 7, die von der zentralen Stromeinspeisung 4 versorgt werden und in einem Unterverteiler 6 angeordnet sind.

Denkbar ist auch eine einzelne abschnittsweise Stromversorgung der Schleifleitungsabschnitte oder auch eine gemeinsame Stromversorgung. Dies hängt von den jeweiligen Umständen ab, z.B. Länge der Abschnitte, Art der Transportfahrzeuge usw.

In dem Unterverteiler 6 ist ebenfalls eine Einrichtung 8 vorgesehen, die einerseits über einen Ethernet Switch 5 bekannter Technologie mit der zentralen Steuerung 3 verbunden ist und andererseits zur gezielten Übertragung von Daten an ein bestimmtes Transportfahrzeug 10 die Schleifleitung dazu in Abschnitte I, II, III, IV unterteilt, wobei in jedem Abschnitt I, II, III, IV sich gleichzeitig nur ein Transportfahrzeug 10 befindet und jeder Abschnitt I, II, III, IV nur mit den Daten für das jeweilige Transportfahrzeug 10 versorgt wird.

Die Einheit 8 ist dazu mit den jeweiligen Schleifleitungen 12a, b eines Abschnitts I, II, III, IV über dedizierte Leitungen verbunden und adressiert diese Leitungen gezielt aufgrund der Adresse jedes Transportfahrzeugs 10 analog eines Computernetzwerks. Somit werden die Daten von der zentralen Steuerung 3 über den Switch 5 an die Einheit 8 mittels des Ethernetprotokolls gesendet und dort in das zur Kommunikation über die Schleifleitung 12 verwendete Protokoll umgesetzt und aufgrund der Adresse des die Daten zu empfangenden Transportfahrzeugs 10 gezielt in die Schleifleitung 12 des jeweiligen Abschnitts I, II, III, IV eingespeist bzw. auf den Strom aufmoduliert. Es versteht sich, dass der umgekehrte Weg ebenfalls möglich ist.

Die Daten werden dann von dem jeweiligen Transportfahrzeug 10 des entsprechenden Abschnitts I, II, III, IV mittels der Einheit 15 aus dem abgegriffenen Strom extrahiert bzw. demoduliert. Diese Daten werden dann an die intelligente programmierbare Steuerung 16 weitergegeben. Es versteht sich wiederum, dass der umgekehrte Weg ebenfalls möglich ist.

Die Einheit 8 zur gezielten Modulation speichert also den jeweiligen Aufenthaltsort eines Transportfahrzeugs 10, also den Schleifleitungsabschnitt I, II, III, IV. Dies kann sich selbstlernend und automatisch vollziehen oder programmiert werden. Anschließend erfolgt die Kommunikation von der Einheit 8 direkt über die jeweiligen Schleifleitungsabschnitte. Die Rück-Kommunikation von dem Transportfahrzeug 10 ist entsprechend "einfacher", da nur ein Weg, nämlich der jeweilige Schleifleitungsabschnitt verfügbar ist.

Selbstverständlich ist es aber möglich, nach Art eines Broadcast Signals, gleichzeitig eine Datenübertragung in alle Abschnitte I, II, III, IV oder Abschnittsgruppen etc. vorzunehmen.

Zur Erhöhung der Sicherheit und der Redundanz der Datenübertragung, ist die übertragene Netto-Datenübertragungsrate der Schleifleitung so klein ist, dass die benötigte Brutto-Datenübertragungsrate groß genug ist, um die benötigte Datenmenge zu übertragen. Somit kann trotz der großen Störungen, z.B. durch das Bürstenfeuer, eine sichere Übertragung gewährleistet worden. Die Netto-Datenübertragungsrate liegt zwischen 20 und 30 kBaud (im Offline-Betrieb höher). Die Verwendung dieser für heutige Verhältnisse sehr kleinen Datenübertragungsrate ist unter Anderem möglich, da die Tarnsportfahrzeuge 10 die intelligente programmierbare Steuerung 16 umfassen, die lediglich mit Aufträgen versorgt werden muss, aber niedere Betriebsfunktionen selbstständig überwacht und ausführt. Auch beinhaltet die intelligente programmierbare Steuerung 16 z.B. eine Art Karte des Systems, so dass das Tarnsportfahrzeug 10 weiß, wo es sich befindet und wohin es fahren muss, um einen Auftrag auszuführen.

Um ein ungewolltes Übersprechen der gezielt adressierten Daten aus der Datenübertragung von der Schleifleitung 12 eines Abschnitts I, II, III, IV in andere nicht adressierte Schleifleitungsabschnitte zu verhindern, ist eine Filtereinrichtung 9 zwischen der Stromeinspeisung über die Netzteile 7 und der Dateneinspeisung jedes Schleifleitungsabschnitts über die Einheit 8 zwischen geschaltet. Die Filtereinrichtung umfasst dazu eine Induktivität pro Ader 12a, b bzw. Phase und einen die Adern 12a, b verbindenden Kondensator. Die Filtereinrichtung 9 filtert also die Datensignale aus dem Strom heraus, so dass diese sich nicht über die "offene" Stromversorgung ausbreiten können.

### Bezugszeichenliste

- 1: Transportsystem
- 2: Steuerungs- und Stromversorgungselektronik
- 3: zentrale Steuerung
- 4: zentrale Stromeinspeisung
- 5: Switch
- 6: Unterverteiler
- 7: Netzteil
- 8: Einheit
- 9: Filtereinrichtung
- 10: Transportfahrzeug
- 11: Fahrschiene
- 12: Schleifleitung
- 12a, b: Ader
- 14: Räder
- 15: Einheit
- 16: intelligente programmierbare Steuerung
- I, II, III, IV: Abschnitt

## Patentansprüche

1. Transportsystem mit Führungen für geführte Transportfahrzeuge (10), wobei die Transportfahrzeuge (10) über eine Schleifleitung (12) mit elektrischem Strom versorgt werden,
**dadurch gekennzeichnet, dass** die Transportfahrzeuge (10) über dieselbe Schleifleitung (12) auch mit Daten von einer Steuereinheit (3) versorgt werden und dass die Schleifleitung (12) für die Datenversorgung in Abschnitte (I, II, III, IV) unterteilt ist, wobei sich im jedem Abschnitt (I, II, III, IV) gleichzeitig ein Transportfahrzeug (10) befindet und jeder Abschnitt (I, II, III, IV) nur mit den Daten für das jeweilige Transportfahrzeug (10) versorgt wird.

2. Transportsystem nach Anspruch 1, **dadurch gekennzeichnet, dass** mehrere Abschnitte (I, II, III, IV) eine parallele Einspeisung aus derselben Stromquelle (4, 7) aufweisen.

3. Transportsystem nach einem der vorhergehenden Ansprüche, **dadurch gekennzeichnet, dass** eine Filtereinrichtung (9) zwischen der Stromeinspeisung und der Dateneinspeisung jedes Schloifleitungsabschnitts (I, II, III, IV) zur Verhinderung des Überspringens der Datensignale in das Stromnetz geschaltet ist.

4. Transportsystem nach einem der vorhergehenden Ansprüche, **dadurch gekennzeichnet, dass** eine Einrichtung (8) zur gezielten Modulation der Daten auf den Strom für die Versorgung eines bestimmten Transportfahrzeugs (10) in einem Schleifleitungsabschnitt (I, II, III, IV) und in jedem Fahrzeug (10) eine Einrichtung (15) zur Demodulation der Daten aus dem Strom vorgesehen ist.

5. Transportsystem nach einem der vorhergehenden Ansprüche, **dadurch gekennzeichnet, dass** die übertragene Netto-Datenübertragungsrate der Schleifleitung (12) so klein ist, dass die benötigte Brutto-Datenübertragungsrate groß genug ist, um die benötigte Datenmenge zu übertragen.

6. Verfahren zum Betrieb und zur Steuerung eines Transportsystems mit Führungen für geführte Transportfahrzeuge (10), wobei die Transportfahrzeuge (10) über eine Schleifleitung (12) mit elektrischen Strom versorgt werden, **dadurch gekennzeichnet, dass** die Transportfahrzeuge über dieselbe Schleifleitung auch mit Daten von einer Steuereinheit (3) versorgt werden, wobei die Schleifleitung für die Datenversorgung in Abschnitte (I, II, III, IV) unterteilt ist, wobei sich im jedem Abschnitt gleichzeitig ein Transportfahrzeug (10) befindet und jeder Abschnitt (I, II, III, IV) nur mit den Daten für das jeweilige Transportfahrzeug (10) adressiert wird.

7. Verfahren nach dem Anspruch 6,
**dadurch gekennzeichnet, dass** ein oder mehrere Abschnitte (I, II, III, IV) aus derselben Stromquelle (4, 7) versorgt werden.

8. Verfahren nach einem der vorhergehenden Ansprüche 6 bis 7, **dadurch gekennzeichnet, dass**
die Datenübertragung mittels gezielter Modulation der Daten auf den Strom für die Versorgung eines bestimmten Transportfahrzeugs (10) in einem adressierten Schleifleitungsabschnitt (I, II, III, IV) und Demodulation der Daten aus dem Strom in jedem Fahrzeug (10) erfolgt.

9. Verfahren nach einem der vorhergehenden Ansprüche 6 bis 8 **dadurch gekennzeichnet, dass** die verwendete Netto-Datenübertragungsrate so klein ist, dass die benötigte Brutto-Datenübertragungsrate groß genug ist, um die benötigte Datenmenge zu übertragen.

10. Verwendung des Verfahrens nach eine der Ansprüche 6 bis 9 im Offline Betrieb mit reduzierter Übertragungsredundanz und/oder erhöhter Datenübertragungsrate, um eine Erhöhung der Netto Datenübertragungsgeschwindigkeit zu den stillstehenden Transportfahrzeugen zu bewirken.

11. Verwendung des Verfahrens nach einem der Ansprüche 6 bis 10 als Messverfahren für die Qualität der Stromabnehmer der Transportfahrzeuge, wobei die Übertragungsqualität überwacht wird und deren Verschlechterung als Maß für die Abnutzung der Stromabnehmer dient.

## Claims

1. A transport system with guides for guided transport vehicles (10) wherein the transport vehicles (10) are supplied with electric power via a sliding contact line (12), **characterised in that** the transport vehicles (10) are also supplied via the same sliding contact line (12) with data from a control unit (3) and that the sliding contact line (12) is divided into sections (I, II, III, IV) for the data supply, wherein a transport vehicle (10) is situated simultaneously in each section (I, II, III, IV) and each section (I, II, III, IV) is supplied only with the data for the respective transport vehicle.

2. A transport system as claimed in Claim 1, **characterised in that** a plurality of sections (I, II, III, IV) have a parallel input from the same power source (4, 7).

3. A transport system as claimed in one of the preceding claims, **characterised in that** a filter device (9) is connected between the power input and the data input of each sliding conductor line section (I, II, III, IV) to prevent the data signals from crossing over into the power network.

4. A transport system as claimed in one of the preceding claims, **characterised in that** a device (8) for targeted modulation of the data on to the current for the supply of a predetermined transport vehicle is provided in a sliding conductor section (I, II, III, IV) and a device (15) for demodulating the data from the current is provided in each vehicle (10).

5. A transport system as claimed in one of the preceding claims, **characterised in that** the nett transmitted data transmission rate of the sliding conductor line (12) is so small that the required gross data transmission rate is large enough to transmit the required amount of data.

6. A method of operating and controlling a transport system with guides for guided transport vehicles (10), wherein the transport vehicles (10) are supplied with electric power via a sliding conductor line (12), **characterised in that** the transport vehicles are also supplied via the same sliding conductor line with data from a control unit (3), wherein the sliding conductor line is divided into sections (I, II, III, IV) for the data supply, wherein a transport vehicle (10) is situated simultaneously in each section and each section (I, II, III, IV) is addressed only with the data for the respective transport vehicle (10).

7. A method as claimed in Claim 6, **characterised in that** one or more sections (I, II, III, IV) are supplied from the same power source (4, 7).

8. A method as claimed in one of the preceding Claims 6 to 7, **characterised in that** the data transmission is effected by means of targeted modulation of the data onto the current for the supply of a predetermined transport vehicle (10) in an addressed sliding conductor line section (I, II, III, IV) and demodulation of the data from the current in each vehicle (10).

9. A method as claimed in one of the preceding Claims 6 to 8, **characterised in that** the nett data transmission ratio used is so small that the required gross data transmission rate is large enough to transmit the required amount of data.

10. Use of the method as claimed in one of Claims 6 to 9 in offline operation with reduced transmission redundancy and/or increased data transmission rate in order to produce an increase in the nett data transmission speed to the stationary transport vehicles.

11. Use of the method as claimed in one of Claims 6 to 10 as a measuring method for the quality of the current collectors of the transport vehicles, wherein the transmission quality is monitored and its deterioration serves as a measure of the wear of the current collectors.

## Revendications

1. Système de transport comprenant des guides destinés à des véhicules de transports guidés (10), les véhicules de transport (10) étant alimentés en courant électrique par une ligne de contact (12),
**caractérisé en ce que** les véhicules de transport (10) sont également alimentés en données provenant d'une unité de commande (3) par la même ligne de contact (12), et **en ce que** la ligne de contact (12) destinée à l'alimentation en données est divisée en sections (I, II, III, IV), un véhicule de transport (10) se trouvant en même temps dans chaque section (I, II, III, IV) et chaque section (I, II. III, IV) n'étant alimentée qu'en données pour chaque véhicule de transport (10).

2. Système de transport selon la revendication 1, **caractérisé en ce que** plusieurs sections (I, II, III, IV) comportent une alimentation parallèle provenant de la même source de courant (4, 7).

3. Système de transport selon l'une des revendications précédentes, **caractérisé en ce qu'**un dispositif de filtre (9) entre l'alimentation en courant et l'alimentation en données de chaque partie de ligne de contact (I, II, III, IV) est monté dans le réseau électrique pour empêcher le saut des signaux de données.

4. Système de transport selon l'une des revendications précédentes, **caractérisé en ce qu'**un dispositif (8) est prévu pour la modulation ciblée des données sur le courant destiné à l'alimentation d'un véhicule de transport (10) déterminé dans une section de ligne de contact (I, II, III, IV) et, dans chaque véhicule (10), un dispositif (15) est prévu pour la démodulation des données du courant.

5. Système de transport selon l'une des revendications précédentes, **caractérisé en ce que** le débit de transmission de données net transmis de la ligne de contact (12) est si faible que le débit de transmission de données brut requis est suffisamment élevé pour transmettre la quantité de données requise.

6. Procédé pour faire fonctionner et commander un système de transport comprenant des guides destinés à des véhicules de transport guidés (10), les véhicules de transport (10) étant alimentés en courant électrique par une ligne de contact (12), **caractérisé en ce que** les véhicules de transport sont alimentés en données provenant d'une unité de commande (3) par la même ligne de contact, la ligne de contact destinée à l'alimentation en données étant divisée en sections (I, II, III, IV), un véhicule de transport (10) se trouvant en même temps dans chaque section et chaque section (I, II, III, IV) n'étant adressée qu'avec les données destinées au véhicule de transport (10) respectif.

7. Procédé selon la revendication 6, **caractérisé en ce qu'**une ou plusieurs sections (I, II, III, IV) sont alimentées à partir de la même source de courant (4, 7).

8. Procédé selon l'une des revendications précédentes 6 à 7, **caractérisé en ce que** la transmission de données est effectuée par modulation ciblée des données sur le courant destiné à l'alimentation d'un véhicule de transport (10) déterminé dans une section de ligne de contact (I, II, III, IV) adressée et par démodulation des données du courant dans chaque véhicule (10).

9. Procédé selon l'une des revendications 6 à 8, **caractérisé en ce que** le débit de transmission de données net utilisé est si faible que le débit de transmission de données brut requis est suffisamment élevé pour transmettre la quantité de données requise.

10. Utilisation du procédé selon l'une des revendications 6 à 9 en mode hors connexion avec une redondance de transmission réduite et/ou un débit de transmission de données accru pour provoquer une augmentation de la vitesse de transmission de données nette vers les véhicules de transport immobiles.

11. Utilisation du procédé selon l'une des revendications 6 à 10, comme procédé de mesure de la qualité des collecteurs de courant des véhicules de transport, la qualité de transmission étant contrôlée et leur détérioration servant de mesure de l'usure des collecteurs de courant.
